(19) Europäisches Patentamt
European Patent Office
Office européen des brevets

(11) Publication number: **0 197 524**
**A2**

(12) # EUROPEAN PATENT APPLICATION

(21) Application number: 86104652.2

(22) Date of filing: 05.04.86

(51) Int. Cl.$^4$: C 08 F 283/10
C 08 G 59/44, C 09 J 3/00
C 09 D 3/58, C 09 J 3/16

(30) Priority: 11.04.85 US 721840

(43) Date of publication of application:
15.10.86 Bulletin 86/42

(84) Designated Contracting States:
DE FR GB IT

(71) Applicant: PPG INDUSTRIES, INC.
One PPG Place
Pittsburgh Pennsylvania 15272(US)

(72) Inventor: Seiner, Jerome Allan
5415 Plainfield Street
Pittsburgh, Pa. 15217(US)

(72) Inventor: Schappert, Raymond Francis
111 Rydal lane
Pittsburgh, Pa. 15237(US)

(74) Representative: Sternagel, Hans-Günther, Dr. et al,
Patentanwälte Dr. Michael Hann Dr. H.-G. Sternagel
Sander Aue 30
D-5060 Bergisch Gladbach 2(DE)

(54) **Curable epoxy-acrylamide compositions.**

(57) A curable composition is made up of a curing component and a curable component. The curable component contains at least one vinyl polymerizable amide group-containing material and an epoxide group-containing material and is particularly useful as adhesive for the preparation of bonding structures such as structural components of transportation vehicles.

EP 0 197 524 A2

Croydon Printing Company Ltd.

# CURABLE EPOXY-ACRYLAMIDE COMPOSITIONS

## Background of the Invention

The present invention relates to curable compositions which are useful as structural adhesives, sealants, and coatings.

There are a variety of applications, for example in assembly of automobile parts, where it is desirable to partially heat cure an adhesive composition at a relatively low temperature in a minimum amount of time. In the assembly of automobile parts this quick precure is useful to maintain parts together until the final cure. Heretofore, this has been difficult to accomplish with the conventionally available adhesive compositions such as epoxy resin based adhesives. These types of compositions are not readily partially curable at a low temperature and with a short bake schedule, e.g. by induction heating or by baking for 2 to 15 minutes in a conventional oven at about 120°C. As a result, spot welds have been used to hold parts together until the final cure schedule is completed. This is particularly disadvantageous since automobile parts which have spot welds are more susceptible to corrosion and in addition, the surface of the metal above the weld must be sanded and prepared for the final topcoat since the surface is typically deformed during the welding operation. There is a need, therefore, for a curable composition which is capable of curing sufficiently at a low temperature and in minimum time such that suitably strong tensile lap shear strength is exhibited.

## Summary of the Invention

In accordance with the present invention there is provided a curable composition, comprising a curing component and a curable component which comprises at least one vinyl polymerizable amide group-containing material and an epoxide group-containing material.

There is also provided a method for forming an adhesive bond between two surfaces to form a bonded structure.

## Detailed Description of the Invention

The curable composition of the present invention comprises a curable component and a curing component adapted to at least partially cure the aforesaid curable component. The curable component comprises a vinyl polymerizable amide group-containing material and an epoxide group-containing material. The vinyl polymerizable amide group-containing material and the epoxide group-containing material are preferably different materials and as such can be selected from a variety of materials. Examples of vinyl polymerizable amide group-containing materials include acrylamide or methacrylamide group-containing materials; cinnamamide; maleamide; crotonamide; maleamic acid and derivatives thereof; and N-methylcitraconamic acid and derivatives thereof. Examples of epoxide group-containing materials include polyepoxides of many types as well as monomeric materials such as glycidyl acrylate or glycidyl methacrylate. In one embodiment the vinyl polymerizable amide group and the epoxide group are both present on the same material, for example, glycidyl methacrylamide, diglycidyl

methacrylamide or glycidyl acrylamide. The curable component preferably comprises at least one acrylamide or methacrylamide group-containing material and a polyepoxide.

The acrylamide or methacrylamide group-containing material can be of various types. The acrylamide or methacrylamide group-containing material can be a simple mono-acrylamide, a diacrylamide, a polyacrylamide, and in addition can contain additional reactive moieties such as acrylate, hydroxyl, epoxy or isocyanate. For example a monoacrylate-monoacrylamide derivative is quite useful herein. It should be understood that the terms monoacrylamide, diacrylamide and polyacrylamide also refer to the presence of methacrylamide groups. If desired, acrylamide or methacrylamide group-containing derivatives with two or more acrylate moieties can be prepared.

Suitable monoacrylamides include acrylamide; methacrylamide; N-isopropyl acrylamide; N-isopropyl methacrylamide; N-butoxymethyl acrylamide; N-butoxymethyl methacrylamide; N-tert-butyl acrylamide; N-tert-butyl methacrylamide; N-methylol acrylamide; N-methylol methacrylamide; N-isobutoxymethyl acrylamide; N-isobutoxymethyl methacrylamide; N-ethoxymethyl acrylamide; N-ethoxymethyl methacrylamide; N-methoxymethyl acrylamide; N-methoxymethyl methacrylamide.

Suitable diacrylamides can be prepared, for example, from monomeric, oligomeric or polymeric alcohols, preferably diols, and an acrylamide or methacrylamide, for example, N-alkoxymethyl (meth)acrylamide or N-methylol (meth)acrylamide. Examples of suitable diols include propoxylated Bisphenol A; ethoxylated Bisphenol A; Bisphenol A; 1,6-hexanediol; 1,3-butylene glycol; diethylene glycol; dipropylene glycol; neopentyl glycol; triethylene glycol; 1,4-butanediol;

and polypropylene glycol. The acrylamides and methacrylamides listed above are suitable here. Polyacrylamides such as triacrylamides, tetraacrylamides and the like can be prepared from higher alcohols and an acrylamide or methacrylamide as have been listed above. Suitable higher alcohols include trimethylolethane, glycerol, trimethylolpropane and pentaerythritol.

Monoacrylate-monoacrylamide derivatives can be prepared, for example, from a hydroxyl functional acrylate or methacrylate, either monomeric or polymeric, and an acrylamide or methacrylamide by a transetherification reaction. For example, a hydroxyl alkyl acrylate or methacrylate can be transetherified with an N-alkoxymethyl acrylamide or N-methylol acrylamide or the corresponding methacrylamides. More particularly, for example, 2-hydroxyethyl acrylate can be transetherified with N-butoxymethyl acrylamide. Also quite useful herein are other acrylate-containing monomers which can transetherify with an acrylamide or methacrylamide. For example, a caprolactone-acrylate monomer commercially available from Union Carbide under the trademark designation TONE M-100 is very useful as a coreactant for N-butoxymethyl acrylamide.

In the preparation of the aforedescribed vinyl polymerizable amide group-containing materials, the number average molecular weight and unsaturation equivalent weight of the product are used as an indication of the success of the reaction. The unsaturation equivalent weight is a measure of the presence of reactive unsaturation and is determined by a bromine addition reaction which is detailed below in the working examples. The number average molecular weight is determined by gel permeation chromatography (GPC) using a polystyrene standard.

It should be understood that the aforedescribed acrylamide or methacrylamide group-containing materials can be used individually or in admixture in conjunction with the polyepoxide in forming the curable component of the claimed curable compositions. In one preferred embodiment, the acrylamide or methacrylamide group-containing material which is used in conjunction with the polyepoxide is a mixture of diacrylamide and triacrylamide. In one further preferred embodiment the curable component comprises a diacrylamide and a polyepoxide.

The polyepoxides useful herein are those having a 1,2-epoxy group, i.e.,

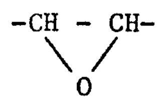

present in the molecule. Hydroxyl groups may also be present and often are. Polyepoxides contain more than one 1,2-epoxy group per molecule. In general, the epoxide equivalent weight will range from about 140 to about 4,000. These polyepoxides are saturated or unsaturated, cyclic or acyclic, aliphatic, alicyclic, aromatic or heterocyclic. They can contain substituents such as halogen, hydroxyl and ether groups.

One useful class of polyepoxides comprises the epoxy polyethers obtained by reacting an epihalohydrin (such as epichlorohydrin or epibromohydrin) with a polyphenol in the presence of an alkali. Suitable polyphenols include resorcinol, catechol, hydroquinone, bis(4-hydroxyphenyl)-2,2-propane, i.e., bisphenol A; bis(4-hydroxyphenyl)-1,1-isobutane 4,4-dihydroxy benzophenone; bis(4-hydroxyphenol)-1,1-ethane; bis(2-hydroxyphenyl)-methane; and 1,5-hydroxynaphthalene. One very common polyepoxide is a polyglycidyl ether of a polyphenol, such as bisphenol A.

Another class of polyepoxides are the polyglycidyl ethers of polyhydric alcohols. These compounds may be derived from such polyhydric alcohols as ethylene glycol, diethylene glycol, triethylene glycol, 1,2-propylene glycol, 1,4-butylene glycol, 1,5-pentanediol, 1,2,6-hexanetriol, glycerol, trimethylolpropane, and bis(4-hydroxy-cyclohexyl)-2,2-propane.

Another class of polyepoxides are the polyglycidyl esters of polycarboxylic acids. These compounds are produced by the reaction of epichlorohydrin or a similar epoxy compound with an aliphatic or aromatic polycarboxylic acid such as oxalic acid, succinic acid, glutaric acid, terephthalic acid, 2,6-naphthalene dicarboxylic acid and dimerized linoleic acid.

Still another class of polyepoxides are derived from the epoxidation of an olefinically unsaturated alicyclic compound. These polyepoxides are non-phenolic and are obtained by epoxidation of alicyclic olefins, for example, by oxygen and selected metal catalysts, by perbenzoic acid, by acid-aldehyde monoperacetate or by peracetic acid. Among such polyepoxides are the epoxy alicyclic ethers and esters well known in the art.

Useful polyepoxides also include those containing oxyalkylene groups in the epoxy molecule. Such oxyalkylene groups have the general formula:

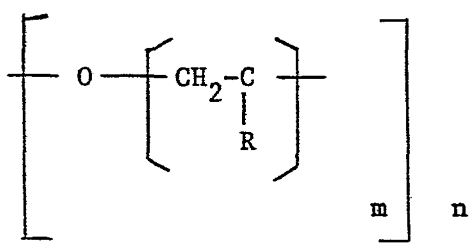

where R is hydrogen or alkyl, preferably a lower alkyl having from 1 to 6 carbon atoms, m is 1 to 4 and n is 2 to 50. Such groups are pendant to

the main molecular chain of the polyepoxide or are part of the main chain itself. The proportion of oxyalkylene groups in the polyepoxide depends upon many factors, including the chain length of the oxyalkylene group, the nature of the epoxy and the degree of water solubility desired.

Another class of polyepoxides consists of the epoxy novolac resins. These resins are obtained by reacting an epihalohydrin with the condensation product of aldehyde and monohydric or polyhydric phenols. A typical example is the reaction product of epichlorohydrin with a phenolformaldehyde condensate.

The polyepoxides can be partially defunctionalized by carboxylic acids, alcohol, water, phenols, mercaptans or other active hydrogen-containing compounds to give hydroxyl-containing polymers if desired which may be useful in this invention.

The curing component is a single material or combination of materials which is capable of curing the vinyl polymerizable amide group-containing material and the epoxide group-containing material. Usually the curing component is a combination of materials and comprises at least one free radical initiator for the vinyl polymerizable amide groups in conjunction with a curing agent adapted to cure the epoxide group-containing material. However, a single curing agent can be utilized to cure both the vinyl polymerizable amide group-containing material and the epoxide group-containing material. The boron trifluoride containing materials detailed below can be used in this manner if desired; although they are also quite useful in conjunction with free radical initiator. It is theorized that in one preferred embodiment the free radical initiated cure of the vinyl polymerizable amide groups proceeds first followed by the amine or polyamide catalyzed

cure of the epoxide group-containing material. Usually the amine or polyamide catalyzed cure proceeds at a higher temperature or for a longer period of time.

Suitable curing agents for the epoxide group-containing material include aliphatic, cycloaliphatic and aromatic polyfunctional amines; and polyamides. Examples of suitable amines include ethylene diamine, diethylene triamine, triethylene tetraamine, tetraethylene pentamine, 1,4-diaminobutane; 1,3-diaminobutane, hexamethylene diamine, 3-(N-isopropylamino) propylamine, diaminocyclohexane, and polyoxypropyleneamines commercially available under the trademark designation JEFFAMINE. Aromatic amines, although not preferred, can also be utilized herein, for example metaphenylene diamine, P,P'-methylene dianiline, and 1,4-aminonaphthalene. Also very useful herein are latent curing agents such as boron trifluoride monoethylamine complex, boron trifluoride diethylamine complex, boron trifluoride triethylamine complex, boron trifluoride pyridine complex, boron trifluoride benzyldimethylamine complex, boron trifluoride benzylamine, boron trifluoride etherate, and dicyandiamide. By latent is meant that these materials are inactive until activated by the application of heat.

Polyamides which are useful in the present compositions are those derived from fatty acids or dimerized fatty acids or polymeric fatty acids and aliphatic polyamines. For example, the materials commercially available from General Mills under the trademark designations VERSAMIDE 220 or 125 are quite useful herein.

The free radical initiator employed can be selected from a wide variety of materials. Examples include diacyl peroxides such as benzoyl peroxide, lauroyl peroxide, decanoyl peroxide; ketone peroxides such as

methyl ethyl ketone peroxide; peroxydicarbonates such as di(n-propyl) peroxydicarbonate, di(4-t-butyl cyclohexyl) peroxydicarbonate, and di(2-ethylhexyl) peroxydicarbonate; peroxyesters such as t-butyl peroxyneodecanoate, t-butyl peroxypivalate, 2,5-dimethyl-2,5-bis(2-ethyl-hexanoyl-peroxy)hexane, t-butyl peroctoate, t-butyl peracetate, t-butyl perbenzoate, t-butyl isopropyl monoperoxycarbonate, t-butylperoxy isobutyrate, t-amyl peroxyneodecanoate, t-amyl peroxypivalate, t-amyl peroctoate, alpha-cumyl peroxyneodecanoate and alpha-cumyl peroxypivalate; dialkyl peroxides such as dicumyl peroxide, 2,5-dimethyl-2,5-bis (t-butylperoxy)hexane, di-tertiarybutyl peroxide, 2,5-dimethyl-2,5-bis (t-butylperoxy)hexyne-3; hydroperoxides such as t-butyl hydroperoxide and cumene hydroperoxide; peroxy ketals such as 1,1-bis(t-butylperoxy)-cyclohexane, 1,1-di(t-butylperoxy) 3,3,5-trimethylcyclohexane; and azo initiators such as 2,2'-azobis(2,4-dimethyl-4-methoxy-valeronitrile).

The amount of free radical initiator will generally vary widely, however, typically ranges from 0.1 percent to 10 percent, preferably 0.5 percent to 5 percent by weight based on the vinyl polymerizable amide group-containing material. The amount of epoxide curing agent also will vary widely, however, typically ranges from 2 percent to 15 percent by weight based on the epoxide group-containing material.

In one preferred embodiment of the present invention the curable component of the claimed curable composition additionally comprises at least one ethylenically unsaturated monomer free of vinyl polymerizable amide groups. Suitable monomers include styrene, tertiary-butyl styrene, divinylbenzene, vinyl toluene, glycidyl acrylate,

glycidyl methacrylate, methyl methacrylate, ethyl acrylate, butyl methacrylate and isobutyl methacrylate. Mixtures of materials can be utilized if desired. Preferably glycidyl methacrylate is utilized. It is believed that the ethylenically unsaturated monomer free of vinyl polymerizable amide groups functions as an adhesion promoter. It should be understood that conventional adhesion promoting additives may also be utilized in conjunction with the aforedescribed monomer, if desired. The amount of ethylenically unsaturated monomer free of vinyl polymerizable amide groups can be used in an amount ranging up to 5 percent by weight based on the vinyl polymerizable amide group-containing material.

The curable compositions of the present invention can contain a variety of additives including pigments, reinforcements, thixotropes, plasticizers, extenders, stabilizers, antioxidants and other modifiers. The claimed compositions can be prepared in a number of ways either as a one-package type of composition or as a two-package composition.

The claimed curable compositions are capable of being rapidly precured at a low temperature. For example, a rapid quick-set can be typically achieved by precuring at a temperature within the range of 250°F (121°C) to 500°F (260°C), preferably 300°F (149°C) to 350°F (177°C) for a period of time broadly within the range of from about 2 seconds to about 15 minutes, the particular length of time being dependent upon the manner of heating selected. For example, for induction heating, two to four seconds is quite suitable, for ultrasonic heating, five to ten seconds, and for a conventional oven, from two minutes to fifteen minutes. The curable compositions can then be completely cured by baking at a temperature generally ranging from 300°F (149°C) to 400°F (204°C) for a period ranging from 15 minutes to one hour.

The curable compositions of the present invention are particularly suitable as adhesive compositions and as such exhibit many advantages. As was discussed above, they are capable of rapidly precuring at a low temperature while still exhibiting good tensile lap shear strength. They are particularly advantageous in automotive applications since they virtually eliminate the need for spot welding. Previously, spot welding was necessary since conventional adhesive compositions could not achieve a low temperature, rapid precure. Spot welding requires added time and materials in automotive production since the surface of the metal above the weld is typically deformed and requires additional treatment prior to topcoating. Moreover, the curable compositions of the present invention result in improved adhesion thereby markedly reducing the potential for adhesive failure. This is particularly important in automotive applications since the adhesive composition is applied onto bare metal which has not been pretreated in any way to prevent corrosion. If adhesive failure occurs, the adhesive composition completely releases from at least one of the surfaces to which it has been applied leaving the bare metal exposed. These areas are now more susceptible to corrosion which reduces the life of the automobile. Since the claimed adhesive compositions result in better adhesion, this difficulty is markedly reduced.

Also provided by the claimed invention is a method for preparing an adhesive bond between two surfaces to form a bonded structure. The method comprises applying to at least one of the surfaces the curable composition detailed above. The method comprises:

I. applying to at least one of the surfaces a curable composition comprising a curing component and a curable component which

comprises, at least one vinyl polymerizable amide group-containing material and an epoxide group-containing material;

II. at least partially curing the curable composition to form the bonded structure.

Both the polymerizable composition and the mode of effecting cure have been discussed in detail above. As was mentioned, the claimed curable composition and method are particularly applicable to structural building components of transportation vehicles, e.g. doors, frames, hoods and the like of automobiles, buses, vans and other vehicles.

The following examples are only illustrative of the invention and are not meant to limit it to their details.

## Example I

Preparation of Propoxylated Bisphenol A bis(oxymethyl-acrylamide).

| Charge | Ingredients | Parts by Weight (grams) |
|---|---|---|
| A | N-butoxymethyl acrylamide (62 percent solution in butanol) | 3004 |
| B | propoxylated Bisphenol A<br>phosphoric acid (85 percent) | 2012<br>22 |
| C | sodium hydroxide (50 percent) | 22 |

A reactor vessel equipped with thermometer, distillation column, and dry air sparge was charged with A and heated to a temperature of 80°C. The reaction mixture was then placed in vacuo and 1172 grams of butanol were removed. Charge B was then added, the temperature raised to

85°C and an additional 844 grams of butanol removed in vacuo. The reaction was complete when a theoretical amount of butanol was removed or a constant weight was achieved. Charge C was then added, the reaction mixture stirred for one hour and then subsequently filtered while hot to remove the neutralized phosphoric acid. The resultant product had an unsaturation equivalent weight of 292 which excludes the unsaturation in the benzene rings in the backbone of the resin, and a number average molecular weight of 407 as determined by GPC using a polystyrene standard. The unsaturation equivalent weight was determined by a bromine addition reaction. A solution of pyridine sulfate dibromide (PSDB) in glacial acetic acid was used as the bromination reagent. Mercuric acetate in glacial acetic acid was used as the catalyst for the reaction. The PSDB and mercuric acetate were added to a weighed sample and allowed to react for 20 minutes in the dark. After 20 minutes, the excess PSDB was reacted with aqueous potassium iodide. The iodine which was formed was titrated with sodium thiosulfate using starch as the indicator.

Unsaturation equivalent weight =

$$\frac{\text{sample weight X 2000}}{\text{normality of titrant} \times \left(\text{volume in milliliters to titrate sample} - \text{volume in milliliters to titrate blank}\right)}$$

## Example II

Preparation of 1,6-hexane bis(oxymethylacrylamide).

| Charge | Ingredients | Parts by Weight (grams) |
|---|---|---|
| A | N-butoxymethyl acrylamide | 515 |
| | 1,6-hexanediol | 239 |
| B | phosphoric acid (85 percent) | 1.2 |
| C | sodium hydroxide (50 percent) | 1.2 |

A reactor vessel was equipped as in Example I, above, and Charge A was added. Charge B was added until a pH of 2.7 was achieved. The reaction mixture was then heated to 100°C in vacuo and butanol was removed until a constant weight was achieved (348 grams of butanol were removed). Charge C was then added, the reaction mixture stirred for one hour and then filtered while hot to remove the neutralized phosphoric acid. The resultant product had an unsaturation equivalent weight of 152 and a number average molecular weight of 260 as determined by GPC using a polystyrene standard.

## Example III

Preparation of Tone M-100 oxymethylacrylamide.

| Charge | Ingredients | Parts by Weight (grams) |
|---|---|---|
| A | N-butoxymethyl acrylamide | 257 |
| | methyl hydroquinone | 0.02 |
| | TONE M-100[1] | 344 |
| B | phosphoric acid (85 percent) | 0.50 |
| C | sodium hydroxide (50 percent) | 1.0 |

(1) A caprolactone-acrylate monomer which is commercially available from Union Carbide.

A reactor vessel was equipped as described in Example I, above, and Charge A was added. Charge B was then added until a pH of 2.9 was achieved. The reaction mixture was then heated to 80°C in vacuo and butanol was removed until a constant weight was achieved (170 grams of butanol were removed). Charge C was then added, the reaction mixture stirred for one hour and then filtered while hot to remove the neutralized phosphoric acid. The resultant product had an unsaturation equivalent weight of 239 and a number average molecular weight of 321 as determined by GPC using a polystyrene standard.

## Example IV

Preparation of polypropylene glycol bis(oxymethylacrylamide).

| Charge | Ingredients | Parts by Weight (grams) |
|---|---|---|
| A | N-butoxymethyl acrylamide | 392 |
| | PPG - 425[2] | 319 |
| B | phosphoric acid (85 percent) | 1 |
| C | sodium hydroxide (50 percent) | 1.25 |

(2) Polypropylene glycol of molecular weight 425 which is commercially available from BASF.

A reactor vessel was equipped as Example I, above, and Charge A was added. Charge B was added until a pH of 3.0 was achieved. The reaction mixture was then heated to between 95°C and 100°C in vacuo to remove butanol until a constant weight was achieved (268 grams of butanol was removed). Charge C was then added, the reaction mixture stirred for

one hour and then subsequently filtered while hot to remove the neutralized phosphoric acid. The resultant product had an unsaturation equivalent weight of 342 and a number average molecular weight of 313 as determined by GPC using a polystyrene standard.

## Example V

Preparation of dipropylene glycol bis(oxymethylacrylamide).

| Charge | Ingredients | Parts by Weight (grams) |
|---|---|---|
| A | N-butoxymethyl acrylamide | 643 |
| | dipropylene glycol | 168 |
| B | phosphoric acid (85 percent) | 3.8 |
| C | sodium hydroxide (50 percent) | 1.6 |

A reactor vessel was equipped as in Example I, above, and Charge A was added. Charge B was then added until a pH of 3.0 was achieved. The reaction mixture was then heated in vacuo to 100°C to remove butanol until a constant weight was achieved (436 grams of butanol were removed). Charge C was then added, the reaction mixture was stirred for one hour and then filtered while hot to remove the neutralized phosphoric acid. The resultant product had an unsaturation equivalent weight of 143 and a number average molecular weight of 184 as determined by GPC using a polystyrene standard.

Examples A to H

In this group of Examples several adhesive compositions were prepared utilizing a variety of materials including acrylates and the acrylamides, prepared in Examples I to V, above. The compositions were evaluated for Tensile Lap Shear strength. The amount of acrylamide added to each composition was such that the unsaturation equivalent weight was constant for each sample. These results are set out in Table I which follows.

Parts by Weight

| Ingredients | A | B | C | D | E | F | G | H-CONTROL |
|---|---|---|---|---|---|---|---|---|
| EPON 828[3] | 75 | 75 | 75 | 75 | 75 | 75 | 75 | 75 |
| Acrylamide of Example I | 50 | | | | | | | |
| Acrylamide of Example II | | 40 | | | | | | |
| Acrylamide of Example III | | | 43 | | | | | |
| Acrylamide of Example IV | | | | 60 | | | | |
| Acrylamide of Example V | | | | | 25 | | | |
| 1,6-Hexanediol diacrylate | | | | | | 39.8 | | |
| Ethoxylated Bisphenol A Dimethacrylate | | | | | | | 20 | |
| TRIGONOX 29B75[4] | 2.0 | 2.0 | 2.0 | 2.0 | 2.0 | 2.0 | 2.0 | 2.0 |
| dicyandiamide | 6.1 | 6.1 | 6.1 | 6.1 | 6.1 | 6.1 | 6.1 | 6.1 |
| Aluminum powder | 62.5 | 62.5 | 59.0 | 67.5 | 50.0 | 57.4 | 47.5 | 41.0 |
| CAB-O-SIL[5] | 6.0 | 6.0 | 6.0 | 6.0 | 6.0 | 6.0 | 6.0 | 6.0 |

(3) This polyepoxide is a polyglycidyl ether of Bisphenol A and is commercially available from Shell Chemical Company.

(4) This peroxy ketal initiator is 1,1-ditertiarybutylperoxy 3,3,5-trimethylcyclohexane and is commercially available from Noury Chemical Corporation.

(5) Hydrophobic fumed silica commercially available from Cabot.

TABLE I

| Example | Lap Shear Strength[6] $lbs/in^2$ after 250°F bake for 15 minutes | Percent[7] cohesive Failure | Lap Shear Strength $lbs/in^2$ after 250°F bake for 15 minutes followed by 350°F bake for 60 minutes | Percent cohesive Failure |
|---|---|---|---|---|
| A | 491 | 100 | 2362 | 45 |
| B | 38 | 100 | 2721 | 90 |
| C | 210 | 80 | 3187 | 10 |
| D | 145 | 85 | 3517 | 30 |
| E | not determined composition did not cure | | 2490 | 55 |
| F | 244 | 0 | 1828 | 0 |
| G | 293 | 100 | 2177 | 5 |
| H (control) | not determined composition did not cure | | 2720 | 45 |

(6) Lap Shear bonds for testing were prepared using two strips of cold rolled steel (1 inch X 4 inches and 72 mils thick). A 6 mil thick film of each of the compositions was applied onto one of the metal strips and then a second strip was placed over top of the first strip so that only a one square inch strip overlapped. The compositions were then subjected to a low temperature rapid precure schedule by baking for 15 minutes at 250°F (121°C). The tensile shear strength of the adhesive bonds after this precure was determined according to ASTM D-1002-65. (Briefly, the ends of the strips were then pulled with an INSTRON TESTER measuring device and the tensile lap

shear strength of the bond measured.) The compositions were then fully cured by baking the metal strips for one hour at 350°F (177°C). The tensile lap shear strength of the adhesive bonds after this complete cure was determined by the same method. The values presented in Table I are an average of two separate determinations.

(7) Percent Cohesive failure was a measure of the cohesive ability of the adhesive. The scale ranged from 0 percent meaning that the adhesive pulled away from one metal surface completely to 100 percent meaning that the adhesive remained adhered to each metal surface but that the adhesive bonds were severed. Values within this range were ascribed by observing that percentage of the area of the applied adhesive film where there was cohesion. The values presented in Table I are an average of two separate determinations.

## EXAMPLES J and K

These Examples utilize the acrylamide of Example I in formulating adhesive compositions that additionally contain glycidyl methacrylate or para-methyl styrene.

| Ingredients | Parts by weight (grams) J | K |
|---|---|---|
| EPON 828 | 75 | 75 |
| Acrylamide of Example I | 50 | 50 |
| para-methyl styrene | 1.0 | |
| glycidyl methacrylate | | 1.0 |
| TRIGONOX 29B75 | 2 | 2 |
| dicyandiamide | 6.1 | 6.1 |
| aluminum powder | 62.5 | 62.5 |
| CAB-O-SIL | 6.0 | 6.0 |

The composition was evaluated for Tensile Lap Shear strength in the same manner as detailed in Table I of Examples A through H. The values which are set out below are an average of two separate determinations.

| Example | Tensile Lap Shear Strength ($lbs/in^2$) After 15 minutes at 250°F (121°C) | After 15 min. at 250°F (121°C) followed by 1 hour at 350°F (177°C) | Percent Cohesive Failure After 1 Hour Bake |
|---|---|---|---|
| J | 622 | 2695 | 50 |
| K | 517 | 2880 | 60 |

## EXAMPLE VI

This Example illustrates the formulation of an adhesive composition utilizing a monoacrylamide.

| Ingredients | Parts by Weight (grams) |
|---|---|
| EPON 828 | 75.0 |
| N-butoxymethyl acrylamide | 33.5 |
| TRIGONOX 29B75 | 2.0 |
| Dicyandiamide | 6.1 |
| Aluminum powder | 62.5 |
| CAB-O-SIL | 6.0 |

The composition was evaluated for Tensile Lap Shear Strength in the same manner as detailed in Table I of Examples A through H. The values which are set out below are an average of two separate determinations.

| Tensile Lap Shear Strength ($lbs/in^2$) | | Percent Cohesive Failure |
|---|---|---|
| After 15 minutes at 250°F (121°C) | After 15 min. at 250°F (121°C) followed by 1 hour at 350°F (177°C) | |
| 233 | 3373 | 100 |

## EXAMPLE VII

This Example illustrates the formulation of an adhesive composition utilizing a triacrylamide.

| Ingredients | Parts by Weight (grams) |
|---|---|
| EPON 828 | 75.0 |
| trimethylolpropane triacrylamide[8] | 40.0 |
| TRIGONOX 29B75 | 2.0 |
| Dicyandiamide | 6.1 |
| Aluminum powder | 62.5 |
| CAB-O-SIL | 6.0 |

[8] This triacrylamide was prepared in the manner set out in Example I from 638.2 parts by weight of N-butoxymethyl acrylamide; 121.8 parts by weight of trimethylolpropane; 8.0 parts by weight of phosphoric acid (50 percent); 0.03 parts by weight of methyl hydroquinone; and 3.2 parts by weight of sodium hydroxide (50 percent).

The composition was evaluated for Tensile Lap Shear Strength in the same manner as detailed in Table I of Examples A through H. The values which are set out below are an average of two separate determinations.

| Tensile Lap Shear Strength ($lbs/in^2$) | | Percent Cohesive Failure After 1 Hour Bake |
|---|---|---|
| After 15 minutes at 250°F (121°C) | After 15 min. at 250°F (121°C) followed by 1 hour at 350°F (177°C) | |
| 41 | 2236 | 60 |

WHAT IS CLAIMED IS:

1. A curable composition, comprising a curing component and a curable component which comprises at least one vinyl polymerizable amide group-containing material and an epoxide group-containing material.

2. The curable composition of Claim 1 wherein the vinyl polymerizable amide group and the epoxide group are both present on the same material.

3. The curable composition of Claim 1 wherein the vinyl polymerizable amide group-containing material and the epoxide group-containing material are different materials.

4. A curable composition comprising a curing component and a curable component which comprises at least one vinyl polymerizable amide group-containing material and a polyepoxide.

5. The curable composition of Claim 4 wherein the curable component additionally comprises at least one ethylenically unsaturated monomer free of vinyl polymerizable amide groups.

6. The curable composition of Claim 5 wherein the ethylenically unsaturated monomer is glycidyl methacrylate.

7. The curable composition of Claim 4 wherein the vinyl polymerizable amide group-containing material is an acrylamide or methacrylamide group-containing material.

8. The curable composition of Claim 7 wherein the acrylamide or methacrylamide group-containing material is a diacrylamide.

9. The curable composition of Claim 4 wherein the vinyl polymerizable amide group-containing material also contains acrylate moieties.

10. The curable composition of Claim 9 wherein the vinyl polymerizable amide group-containing material contains one acrylate moiety.

11. The curable composition of Claim 7 wherein the acrylamide or methacrylamide group-containing material is prepared from an alcohol and an N-alkoxymethyl meth(acrylamide) or N-methylol (meth)acrylamide.

12. The curable composition of Claim 11 wherein the acrylamide or methacrylamide group-containing material is a diacrylamide and is prepared from a diol and an N-alkoxymethyl (meth)acrylamide or N-methylol (meth)acrylamide.

13. The curable composition of Claim 4 wherein the polyepoxide is a diglycidyl ether of a polyhydric alcohol.

14. The curable composition of Claim 4 wherein the curing component comprises at least one free radical initiator in combination with at least one curing agent adapted to cure the polyepoxide.

15. The curable composition of Claim 14 wherein the curing component is a free radical initiator in combination with an amine curing agent.

16. The curable composition of Claim 15 wherein the curing component is a free radical initiator in combination with dicyandiamide.

17. A curable composition, comprising a curing component and a curable component which comprises at least one acrylamide or methacrylamide group-containing material and a polyepoxide.

18. The curable composition of Claim 17 wherein the curable component additionally comprises at least one ethylenically unsaturated monomer free of vinyl polymerizable amide groups.

19. The curable composition of Claim 18 wherein the ethylenically unsaturated monomer is glycidyl methacrylate.

20. The curable composition of Claim 17 wherein the acrylamide or methacrylamide group-containing material also contains acrylate moieties.

21. The curable composition of Claim 17 wherein the curing component comprises at least one free radical initiator in combination with at least one curing agent adapted to cure the polyepoxide.

22. Use of the curable composition of claim 1 to 21 as an adhesive for bonding two surfaces together forming a bonded structure by applying to at least one of the surfaces the curable composition, and at least partially curing the curable composition.

23. Use of claim 22 characterized in that the bonded structure is a structural component of a transportation vehicle.